# EUROPEAN PATENT APPLICATION

(11) **EP 4 610 865 A1**
(43) Date of publication of application: **03.09.2025**
(21) Application number: 25160498.9
(22) Date of filing: 27.02.2025
(51) Int. Cl.: G06F 21/62, G06V 40/16, G06V 40/50

(54) **INFORMATION PROCESSING APPARATUS, INFORMATION PROCESSING METHOD, AND NON-TRANSITORY COMPUTER-READABLE STORAGE MEDIUM**

(30) Priority: 29.02.2024 JP 2024030638
(71) Applicant: CANON KABUSHIKI KAISHA, Tokyo 146-8501 (JP)
(72) Inventor: NORO, Hideo, Tokyo, 146-8501 (JP)
(74) Representative: TBK

(57) **Abstract**

An information processing apparatus comprises an obtaining means that obtains person information that is identification information assigned to each person in a group of people included in a captured image; a communication means that communicates with a server storing information identifying a consenting person that consents to use of a biometric identifier; a determination means that determines whether the person included in the captured that corresponds to the obtained person information is a person who consents to the use of the biometric identifier, based on the received consenting person information from the server; and a processing means that executes processing which uses the biometric identifier of the person in accordance with a consent determination by the determination means.

## Description

### BACKGROUND

### Technical Field

The present disclosure relates to the use of biometric identifiers.

### Description of the Related Art

Authentication techniques such as facial recognition authenticate an individual by extracting biometric identifiers for identifying the individual from an image and verifying those biometric identifiers against a biometric identifier database.

However, because it is difficult to change biometric identifiers, restrictions on the use of biometric identifiers are progressing. Laws that stipulate such restrictions prohibit the use of biometric identifiers without the consent of the individual.

Accordingly, if a subject has not consented to the use of their own biometric identifiers, it is desirable to be able to restrict the extraction and use of biometric identifiers from images for which explicit consent has not been obtained, or which include a person from whom consent has not been obtained. Japanese Patent Laid-Open No. 2022-119549 discloses explicitly obtaining consent for the use of biometric identifiers from a person who is a subject.

According to Japanese Patent Laid-Open No. 2022-119549, consent is explicitly obtained from a person who is a subject each time individual authentication is performed. As such, a user may be required to obtain consent for the use of biometric identifiers each time a photo is taken, e.g., even when friends take photos of each other. This is burdensome for the user taking the photo.

### SUMMARY

The present disclosure provides a technique for reducing a burden on a user who obtains consent for the use of a biometric identifier.

The present invention in its first aspect provides an information processing apparatus as specified in claims 1 to 11.

The present invention in its second aspect provides an information processing method as specified in claim 12.

The present invention in its third aspect provides a non-transitory computer-readable storage medium as specified in claim 13.

Further features of the present disclosure will become apparent from the following description of exemplary embodiments (with reference to the attached drawings).

### BRIEF DESCRIPTION OF THE DRAWINGS

FIG. 1 is a block diagram illustrating the overall configuration of a biometric identifier management system of an embodiment.
FIG. 2 is a diagram illustrating the flow of consent information determination processing executed by a camera device of an embodiment.
FIG. 3A is a diagram illustrating an example of changes in a captured image processed in an embodiment.
FIG. 3B is a diagram illustrating an example of changes in a captured image processed in an embodiment.
FIG. 3C is a diagram illustrating an example of changes in a captured image processed in an embodiment.
FIG. 4A is a diagram illustrating an example of detected person information.
FIG. 4B is a diagram illustrating an example of detected person information.
FIG. 4C is a diagram illustrating an example of detected person information.
FIG. 5 is a diagram illustrating an example of a screen for inputting an ID of a person.
FIG. 6 is a diagram illustrating the flow of consent information sending processing executed by a consent management server of an embodiment.
FIG. 7 is a diagram illustrating an example of consenting person information of an embodiment.
FIG. 8 is a block diagram illustrating the overall configuration of a biometric identifier management system of an embodiment.
FIG. 9 is a diagram illustrating the flow of consent information determination processing executed by a camera device of an embodiment.
FIG. 10A is a diagram illustrating an example of detected person information of an embodiment.
FIG. 10B is a diagram illustrating an example of detected person information of an embodiment.
FIG. 10C is a diagram illustrating an example of detected person information of an embodiment.
FIG. 11 is a diagram illustrating an example of consenting person information of an embodiment.
FIG. 12 is a block diagram illustrating the overall configuration of a biometric identifier management system of an embodiment.
FIG. 13 is a diagram illustrating the flow of consent information determination processing executed by a camera device of an embodiment.
FIG. 14 is a diagram illustrating the flow of consent information sending processing executed by a consent management server of an embodiment.
FIG. 15 is a block diagram illustrating the overall configuration of a biometric identifier management system of an embodiment.
FIG. 16 is a diagram illustrating the flow of consent information determination processing executed by a camera device of an embodiment.
FIG. 17 is a diagram illustrating the flow of consent information sending processing executed by a consent management server of an embodiment.
FIG. 18 is a diagram illustrating an example of consenting person information of an embodiment.
FIG. 19 is a block diagram illustrating the hardware configuration of an information processing apparatus of an embodiment.
FIG. 20 is a sequence chart illustrating the flow of processing by a biometric identifier management system of an embodiment.
FIG. 21 is a sequence chart illustrating the flow of processing by a biometric identifier management system of an embodiment.
FIG. 22 is a sequence chart illustrating the flow of processing by a biometric identifier management system of an embodiment.
FIG. 23 is a sequence chart illustrating the flow of processing by a biometric identifier management system of an embodiment.

### DESCRIPTION OF THE EMBODIMENTS

Hereinafter, embodiments will be described in detail with reference to the attached drawings. Note, the following embodiments are not intended to limit the scope of the claimed disclosure. Multiple features are described in the embodiments, but limitation is not made to an disclosure that requires all such features, and multiple such features may be combined as appropriate. Furthermore, in the attached drawings, the same reference numerals are given to the same or similar configurations, and redundant description thereof is omitted.

### First Embodiment

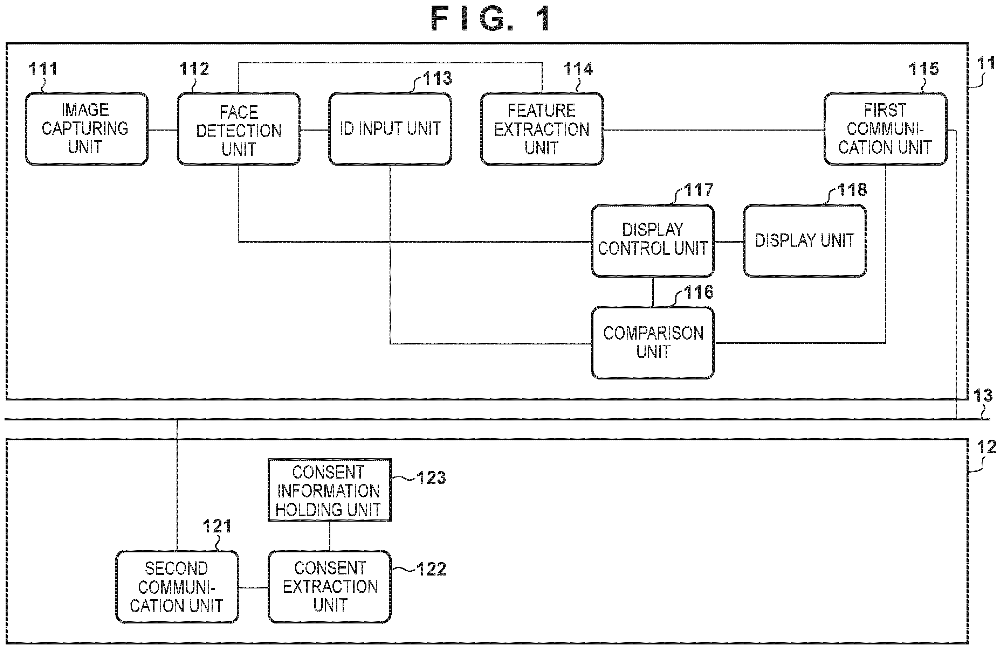

An example of a first embodiment will be described first. FIG. 1 is a block diagram illustrating the overall configuration of a biometric identifier management system of the first embodiment.

As illustrated in FIG. 1, the biometric identifier management system of the first embodiment includes a camera device 11 and a consent management server 12. The camera device 11 and the consent management server 12 are connected to each other over a network 13 so as to be capable of exchanging information with each other. The network 13 may include either wireless communication or wired communication, and may include both types of communication.

The camera device 11 captures an image of a subject, such as a person, and extracts a feature amount of the person's face as a biometric identifier according to whether the person has consented to their biometric identifier being used. The camera device 11 includes an image capturing unit 111, a face detection unit 112, an ID input unit 113, a feature extraction unit 114, a first communication unit 115, a comparison unit 116, a display control unit 117, and a display unit 118.

The image capturing unit 111 receives light from the subject, such as a person, through a lens unit or the like, photoelectrically converts the light to generate data of an image (a captured image), and outputs the data to the face detection unit 112 and the like. The image capturing unit 111 includes an image sensor such as a Complementary Metal-Oxide-Semiconductor (CMOS) sensor, a Charge Coupled Device (CCD) sensor, or the like. In the following descriptions, the term "image" may also include a moving image, a still image, video, and the data thereof.

The face detection unit 112 detects the face of a person from the image obtained from the image capturing unit 111, and outputs information on the detected face along with the captured image. The information on the face is, for example, the coordinates of the four vertices of a rectangular face frame surrounding the face in the captured image. The face detection unit 112 registers and updates the information on the face in detected person information. Although details will be given later, the detected person information is information in which a face frame, whether consent has been given, a name, and the like are associated with an ID of the person.

The ID input unit 113 obtains an ID, which is information on the person included in the captured image. The ID input unit 113 is an example of an "obtaining unit". The ID is a unique value, assigned to each person, that makes it possible to identify that person. The ID is an example of "person information", and is also an example of "identification information". The ID input unit 113 obtains, as an ID, information input by the user using an input device such as a touch panel or the like, for example. The ID input unit 113 associates that ID with the face of the person. The ID input unit 113 registers the obtained ID in the detected person information. Note that when the faces of a plurality of people are included in an image, the ID input unit 113 may obtain the ID of each person.

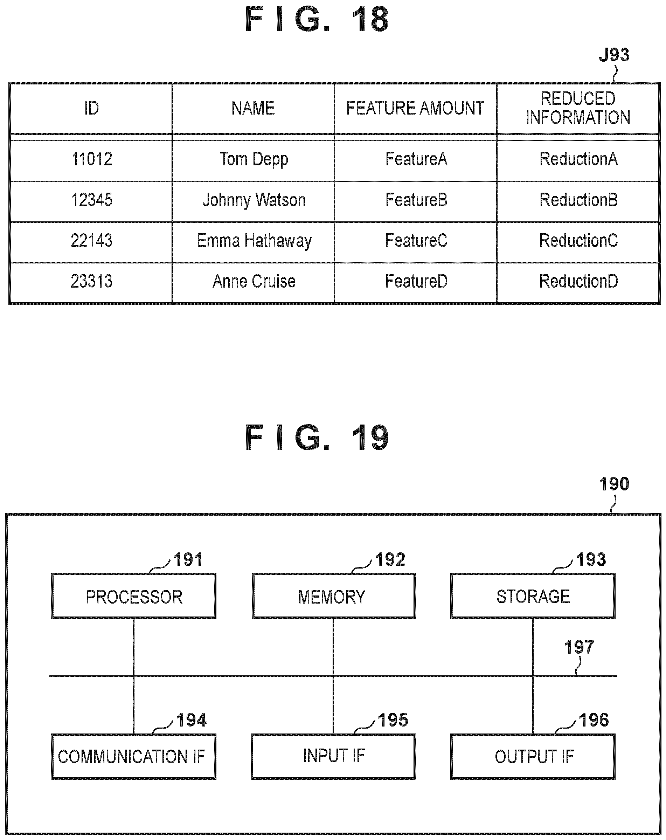

The feature extraction unit 114 extracts a feature amount of the face as a biometric identifier from the image of the face of the person obtained from the face detection unit 112. Although the present embodiment will describe a feature amount of the face as an example of the biometric identifier, it should be noted that the biometric identifier is not limited thereto. For example, the biometric identifier may be a feature amount extracted from a fingerprint, an iris pattern, or the like. The biometric identifier may also be a combination of feature amounts extracted from a face, a fingerprint, and an iris pattern. In the present embodiment, the feature extraction unit 114 extracts a feature amount of the face of the person as the biometric identifier in accordance with a result of a determination by the comparison unit 116 (described later). Specifically, the feature extraction unit 114 extracts a feature amount of the face of the person when the result of the determination by the comparison unit 116 indicates consent to the use of the biometric identifier. However, the feature extraction unit 114 does not extract the feature amount of the face of the person when the result of the determination indicates no such consent. The feature extraction unit 114 stores the extracted feature amount of the face of the person as a biometric identifier in a storage device. The feature extraction unit 114 is an example of an "extraction unit" and a "processing unit". The storage device will be described in detail later with reference to FIG. 19.

The first communication unit 115 communicates with external devices, including the consent management server 12, over the network 13, and exchanges information therewith. The first communication unit 115 is an example of a "communication unit" and the "processing unit". The first communication unit 115 receives, from the consent management server 12, consenting person information including an ID, serving as identification information, of a consenting person, who is a person consenting to the use of a biometric identifier. The first communication unit 115 may output the feature amount of a consenting person to another device as a biometric identifier in accordance with the result of the determination by the comparison unit 116. The "other device" is, for example, an external reinforcement learning device.

The comparison unit 116 determines whether a person in a captured image consents to the use of their biometric identifier. The comparison unit 116 is an example of a "determination unit". For example, the comparison unit 116 determines whether a person consents to the use of their biometric identifier on the basis of whether the ID obtained by the ID input unit 113 is present among a plurality of IDs present in the consenting person information received from the consent management server 12. If the ID of a person in a captured image is determined to be present in the consenting person information, the comparison unit 116 determines that the person corresponding to that ID consents to the use of their biometric identifier. In this case, the comparison unit 116 extracts the name of the person associated with the ID from the consenting person information, and takes information associating the ID with the name along with an indication that the person consents to the use of their biometric identifier as the result of the determination. On the other hand, if the ID of a person in a captured image is determined not to be present in the consenting person information, the result of the determination by the comparison unit 116 is that that person does not consent to the use of their biometric identifier. The comparison unit 116 updates the detected person information on the basis of the result of the determination.

If the result of the determination obtained from the comparison unit 116 indicates that the person whose ID has been accepted by the ID input unit 113 consents to the use of their biometric identifier, the display control unit 117 generates an image including the name of that person in the vicinity of the face image of that person. The display control unit 117 displays the generated image on the display unit 118.

The display unit 118 displays images on the basis of instructions from the display control unit 117. For example, the display unit 118 displays the names and the like of people superimposed on an image captured by the image capturing unit 111. The display unit 118 may be a display device such as a liquid crystal display, an organic electroluminescence (EL) display, or the like, for example.

The consent management server 12 holds and manages the information of people consenting to the use of their biometric identifier as the consenting person information. The consent management server 12 includes a second communication unit 121, a consent extraction unit 122, and a consent information holding unit 123.

The second communication unit 121 exchanges information with the first communication unit 115 of the camera device 11 over the network 13. For example, the second communication unit 121 obtains the consenting person information from the consent extraction unit 122 and sends that information to the first communication unit 115.

The consent extraction unit 122 extracts and obtains the consenting person information held by the consent information holding unit 123. The consent extraction unit 122 outputs the extracted consenting person information to the second communication unit 121 to send that information to the camera device 11. Although the timing at which the consent extraction unit 122 obtains the consenting person information is not particularly limited, the timing may be, for example, when the consenting person information is updated, when a request is received from the camera device 11, or the like.

The consent information holding unit 123 holds the consenting person information. The consent information holding unit 123 reads out and passes on the consenting person information on the basis of an instruction from the consent extraction unit 122.

FIG. 19 is a block diagram illustrating the hardware configuration of an information processing apparatus 190 included in the camera device 11. The information processing apparatus 190 is an example of a "computer". The information processing apparatus 190 of the camera device 11 includes a processor 191, a memory 192, storage 193, a communication IF 194, an input IF 195, an output IF 196, and a bus 197. The processor 191, the memory 192, the storage 193, the communication IF 194, the input IF 195, and the output IF 196 are connected to each other by a bus 197 so as to be capable of exchanging information with each other.

The processor 191 is an arithmetic processing unit, and is, for example, a Central Processing Unit (CPU). Note that the information processing apparatus 190 may include, instead of or in addition to the CPU, another processor such as a Micro Processing Unit (MPU), a Graphics Processing Unit (GPU), or a Quantum Processing Unit (QPU). The processor 191 implements various functions by reading out programs stored in the storage 193 and loading those programs into the memory 192. For example, the processor 191 implements some or all of the functions of the face detection unit 112, the ID input unit 113, the feature extraction unit 114, the first communication unit 115, the comparison unit 116, and the display control unit 117 by loading programs. Note that some or all of the functions of the face detection unit 112, the ID input unit 113, the feature extraction unit 114, the first communication unit 115, the comparison unit 116, and the display control unit 117 may be implemented by one or more circuits, such as an Application Specific Integrated Circuit (ASIC) or a Field Programmable Gate Array (FPGA).

The memory 192 is, for example, a high-speed readable/writable storage device such as a Random Access Memory (RAM). The memory 192 functions as a work area when the processor 191 executes programs. The memory 192 temporarily stores programs, parameters necessary for executing the programs, and the like.

The storage 193 is, for example, a non-volatile storage device such as a Hard Disk Drive (HDD) or a Solid State Drive (SSD). The storage 193 holds programs, parameters necessary for executing the programs, results of executing the programs, and the like even when power is not being supplied thereto. The storage 193 stores, for example, a feature amount of the face of the person extracted by the feature extraction unit 114.

The communication IF 194 is an interface for implementing communication with external devices, such as the consent management server 12, over a wired or wireless network. The first communication unit 115 of the present embodiment communicates with the external devices through the communication IF 194.

The input IF 195 is an interface for accepting input of information from an input device. The input device is a mouse, a keyboard, a touch panel, or the like, for example. The ID input unit 113 of the present embodiment obtains an input ID through the input IF 195. The face detection unit 112 of the present embodiment also detects the face of a person from a captured image obtained from the image capturing unit 111 through the input IF 195. Although the input IF 195 for obtaining the ID and the input IF 195 for obtaining the captured image may be physically different, these IFs are given the same number for the sake of simplicity.

An output IF 196 is an interface for outputting information to an external device. The external device is a display device, such as a display or the like, for example. The display unit 118 of the present embodiment displays images that are based on information output from the output IF 196.

The consent management server 12 also includes an information processing apparatus 190 having the same configuration as described above. In the consent management server 12, the processor of the information processing apparatus 190 implements some or all of the functions of the second communication unit 121, the consent extraction unit 122, and the consent information holding unit 123 by loading programs.

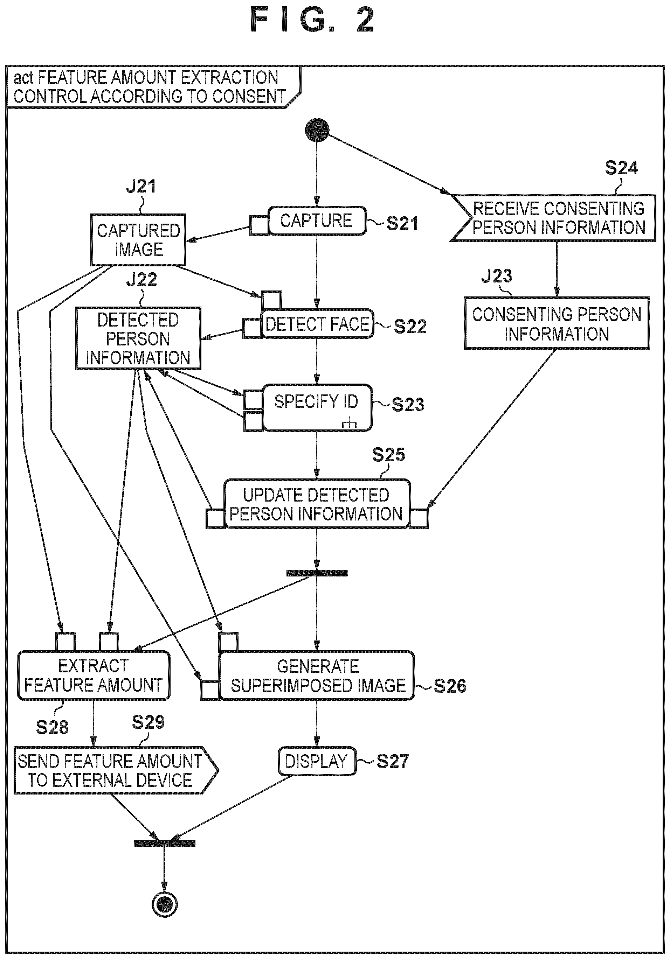

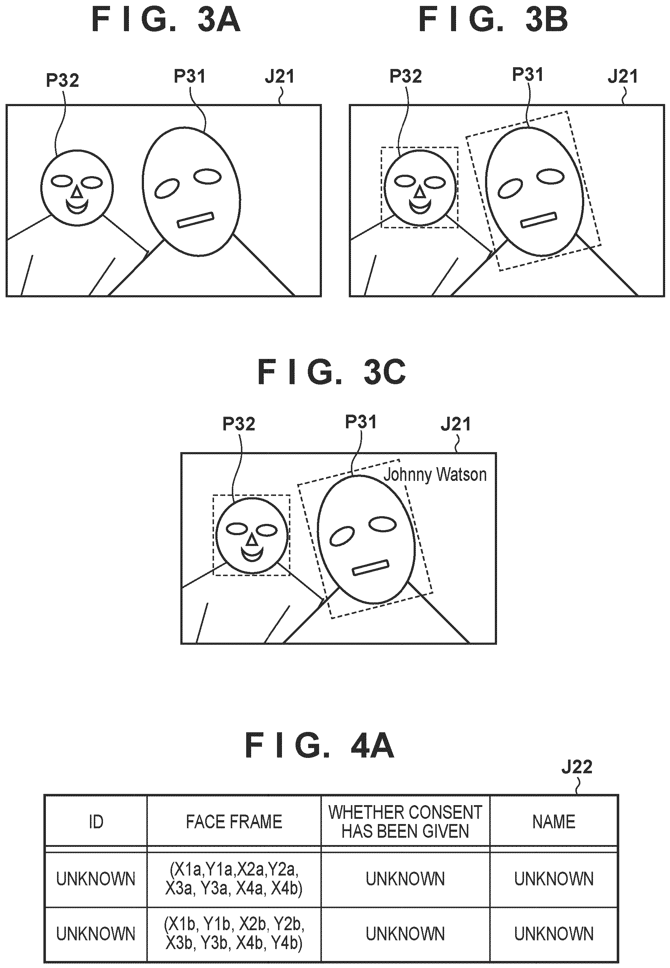

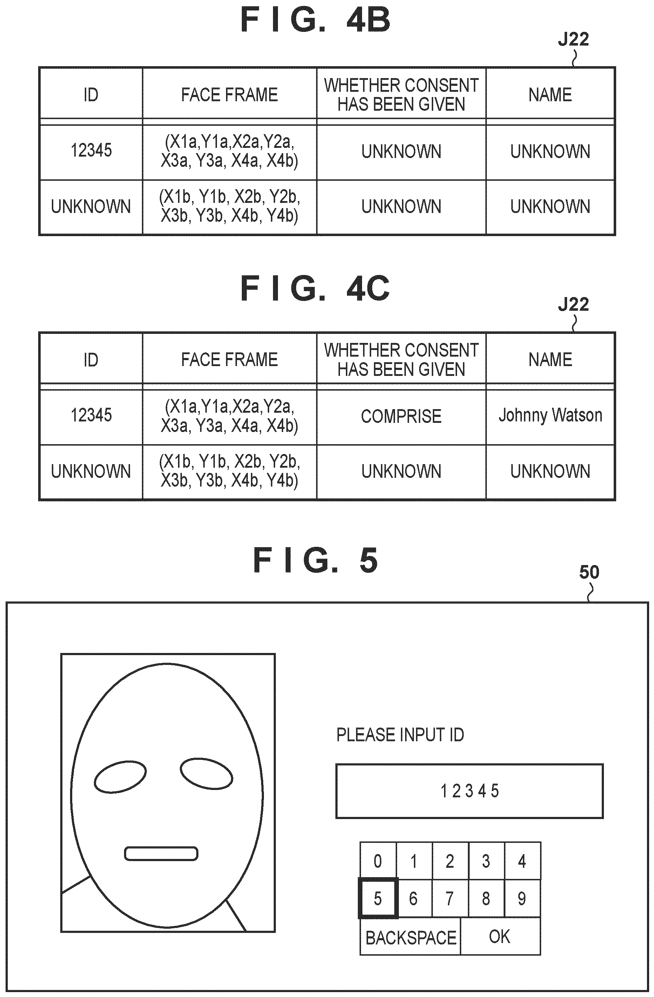

FIG. 2 is a diagram illustrating the flow of consent information determination processing executed by the camera device 11 of the first embodiment. In the camera device 11, for example, the processor 191 executes the consent information determination processing by loading a program. FIGS. 3A to 3C are diagrams illustrating an example of changes in a captured image processed in the first embodiment. FIGS. 4A to 4C are diagrams illustrating an example of the detected person information. FIG. 5 illustrates a screen for inputting an ID of a person.

In step S21, the image capturing unit 111 of the camera device 11, which serves as a device that uses biometric identifiers, captures an image of a person and generates a captured image J21. FIG. 3A illustrates an example of the captured image J21. At this stage, the display control unit 117 may display the captured image J21 on the display unit 118. Two people appear in the captured image J21. The person on the right side of the captured image J21 in FIG. 3A is a person P31, and the person on the left side is a person P32.

In step S22, the face detection unit 112 executes face detection processing for detecting the faces of the people on the captured image J21. The face detection processing is processing that detects faces within the image and calculates coordinates of face frames surrounding the faces. Note that the face detection unit 112 may detect the positions of facial organs such as the eyes, the nose, the mouth, and the like in the face detection processing. For example, technology such as a Multi-task Cascaded Convolutional Network (MTCNN) or RetinaFace may be applied as the face detection processing.

In step S22, the face detection unit 112 generates or updates detected person information J22, illustrated in FIG. 4A, as a result of the face detection processing. The detected person information J22 includes information such as an ID, a face frame, whether consent has been given, and a name. The information in the "ID" column indicates the ID of the person whose face has been detected. The information in the "face frame" column indicates the coordinates of the four vertices of the rectangular face frame surrounding the detected face. The information in the "consent Y/N" column indicates whether the person consents to the use, extraction, and the like of their biometric identifier. The information in the "name" column indicates the name of the person. At the stage where the face detection unit 112 detects the face, the information of the ID, whether consent has been given, and the name are unknown. Note that the detection result in the first row of the detected person information J22 is information about the person P31, and the detection result in the second row is information about the person P32.

In step S23, the ID input unit 113 specifies the ID of the person whose face has been detected. The ID input unit 113 determines the "ID" item in the detected person information J22 on the basis of information input by the user.

An example in which the ID of the person P31 is specified will be described here. An example in which the display control unit 117 displays an ID input screen 50 on the display unit 118 of the camera device 11, and the ID input unit 113 accepts the input of an ID, will be described here as the method for specifying the ID.

First, the display control unit 117 displays, on the display unit 118 (e.g., on a viewfinder), a screen on which face frames, such as those illustrated in FIG. 3B, are displayed as superimposed broken lines. The face frames can be identified based on the face frame information in the detected person information J22.

A user designates the person P31 in the captured image J21. The user making the designation using various operation units is conceivable as the designation method. The operation unit is, for example, an input device such as a joystick, physical up/down/left/right buttons, and a touch panel (not shown) integrated with the display unit 118, or the like. Note that the operation unit is not particularly limited.

For example, if the user selects the person P31 on a touch panel, the display control unit 117 switches the screen displayed on the display unit 118 to the ID input screen 50 for the person P31, illustrated in FIG. 5. The ID input screen 50 includes number buttons for inputting an ID, a "backspace" button, an "OK" button, and an ID display field that displays the ID being input. The user inputs the ID by selecting a plurality of numbers on the touch panel and then selecting the "OK" button. The ID input unit 113 obtains the ID of the person P31 as a result. Note that the method for inputting the ID is not particularly limited. For example, the ID input unit 113 may obtain the ID from text input directly using physical keys and software keys, or may obtain an ID input by selecting numbers on the screen using a joystick or up/down/left/right buttons. The ID input unit 113 may also read out and obtain information of the ID from a membership card or the like provided with an RFID and a two-dimensional barcode.

The ID input unit 113 obtains and specifies the ID of the detected face, i.e., the person in each row of the detected person information J22 in FIG. 4A.

The ID input unit 113 updates the detected person information J22 on the basis of the specified ID. It is assumed here that the ID input unit 113 successfully specified the ID for the person P31, but was unable to specify the ID for the person P32. Accordingly, as illustrated in FIG. 4B, the ID input unit 113 updates the "ID" field for the person P31 in the first row of the detected person information J22 to "12345", but keeps the "ID" field for the person P32 in the second row "unknown".

At this stage, the ID of the person P31 appearing in the captured image J21 has been specified, but it is unknown whether the person P31 has consented to the use of their biometric identifier. Accordingly, the camera device 11 obtains the consenting person information, including information about whether the person has given their consent, from the consent management server 12, which functions as a biometric identifier management server.

By receiving the consenting person information, sent from the consent management server 12, including whether the person has consented to the use of their biometric identifier along with the ID of the person, the camera device 11, which functions as a biometric identifier usage device of the first embodiment, does not need to explicitly obtain consent from the user each time authentication is performed.

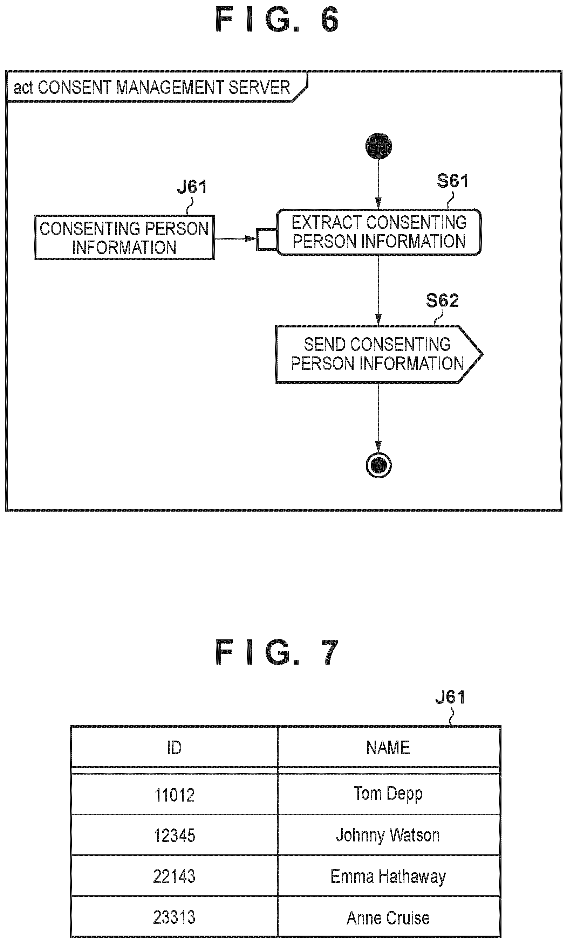

FIG. 6 is a diagram illustrating the flow of consent information sending processing executed by the consent management server 12 of the first embodiment. In the consent management server 12, for example, the processor 191 illustrated in FIG. 19 executes the consent information sending processing by loading a program.

Consenting person information J61 is information on a person who consented to the use of their biometric identifier, and is held in the consent information holding unit 123 illustrated in FIG. 1. Accordingly, the consent for the use of the biometric identifier is typically obtained only once, when added to the consent information holding unit 123.

FIG. 7 illustrates an example of the consenting person information of the first embodiment. The consenting person information J61 illustrated in FIG. 7 holds IDs and corresponding names for four people. Here, although the ID is a required item, the name may be changed as appropriate by the application. In the present embodiment, the consenting person information J61 holds the name in order to display the name of that person in the vicinity of the detected face. The ID is a unique identifier that identifies the person. In other words, the same ID is not associated with a plurality of people. Note that the values held in the consenting person information J61 are not particularly limited. For example, the consenting person information J61 may include various types of information as necessary, such as gender, address, telephone number, and the like.

Returning to FIG. 6, in step S61, the consent extraction unit 122 extracts and obtains the consenting person information J61 from the consent information holding unit 123.

Then, in step S62, the second communication unit 121 sends the consenting person information obtained by the consent extraction unit 122 to the first communication unit 115 of the camera device 11 over the network 13.

Although an example in which the first communication unit 115 and the second communication unit 121 exchange the information over the network 13, it is not absolutely necessary to exchange the information over the network 13.
For example, the camera device 11 and the consent management server 12 may exchange data using a storage medium such as an SD card as an information transmission medium. However, when an SD card or the like is used as the information transmission medium, it takes a long time for the camera device 11 to confirm whether consent has been given. The method for sending and receiving the data is the same in the following embodiments as well.

Returning to FIG. 2, in step S24, the first communication unit 115 receives the consenting person information J23 sent from the second communication unit 121. In step S24, the camera device 11 may obtain the consenting person information from the consent management server 12 by, for example, sending a request for the consenting person information to the consent management server 12. The content of consenting person information J23 received by the first communication unit 115 is the same as in FIG. 7.

In step S25, the comparison unit 116 updates the detected person information J22. Specifically, the comparison unit 116 confirms whether the ID indicated by the detected person information J22 in FIG. 4B, which here is an ID of "12345" of the person P31 identified in step S23, is present in the consenting person information J23. If the ID is present in the consenting person information J23, the comparison unit 116 determines that the person having that ID consents to the use of their biometric identifier, extracts their name from the consenting person information J23, and updates the detected person information J22. For example, as illustrated in FIG. 7, because the ID "12345" is present in the consenting person information J23, the comparison unit 116 extracts the name "Johnny Watson", which is associated with the ID "12345." Then, as illustrated in FIG. 4C, the comparison unit 116 changes "consent Y/N" for the ID "12345" in the detected person information J22 from "unknown" to "yes", changes the name to "Johnny Watson", and updates the detected person information J22. If the ID is not present in the consenting person information J23, the comparison unit 116 may change "consent Y/N" in the detected person information J22 from "unknown" to "no".

In step S26, the display control unit 117 generates an image by superimposing a face frame surrounding the face of the person having the ID of "12345", and the name "Johnny Watson" in the vicinity of the person, on the captured image J21. FIG. 3C is an example of the captured image J21 generated by the display control unit 117 in step S26. In the example illustrated in FIG. 3C, a face frame is displayed as a broken line, and the name is displayed in the vicinity of the face. However, this is done according to the specifications of the application, and the position and display format may be changed as appropriate by applying a known technology.

In step S27, the display control unit 117 displays, on the display unit 118, the captured image J21 on which the face frame and the name are superimposed.

In step S28, the feature extraction unit 114 extracts a feature amount of the face image of the person who has consented to the use of their biometric identifier. Here, in step S25, the comparison unit 116 confirms that consent has been obtained for the use of the biometric identifier for the person P31 having the ID of "12345". Accordingly, the feature extraction unit 114 extracts the face image by cropping the captured image J21 at the face frame of the person P31 having the ID of "12345" in the detected person information J22, and extracts the feature amount by using a feature extractor on the extracted face image. For example, a technology such as FaceNet may be applied as the feature extractor for the face image.

The feature amount extracted from the face image by the feature extraction unit 114 is a biometric identifier that can identify the individual and can be used for individual authentication and the like. Note that in general, a feature amount is often expressed as real vectors in tens to thousands of dimensions.

Reinforcement learning can be given as an example of a method for using a feature of the face (the biometric identifier) of the person having the extracted ID of "12345". For example, in step S29, the first communication unit 115 may cause reinforcement learning to be performed by sending the feature amount extracted by the feature extraction unit 114 over the network 13 to an additional learning device that uses facial features (not shown). By performing reinforcement learning, a feature extractor can be generated that generally increases the ability to identify the person having the ID of "12345". The camera device 11 may also perform additional learning, for example, by using a feature amount of the face as a biometric identifier, such as by the feature extraction unit 114 within the device. The camera device 11 may identify a person through facial recognition using a feature amount of the face as a biometric identifier.

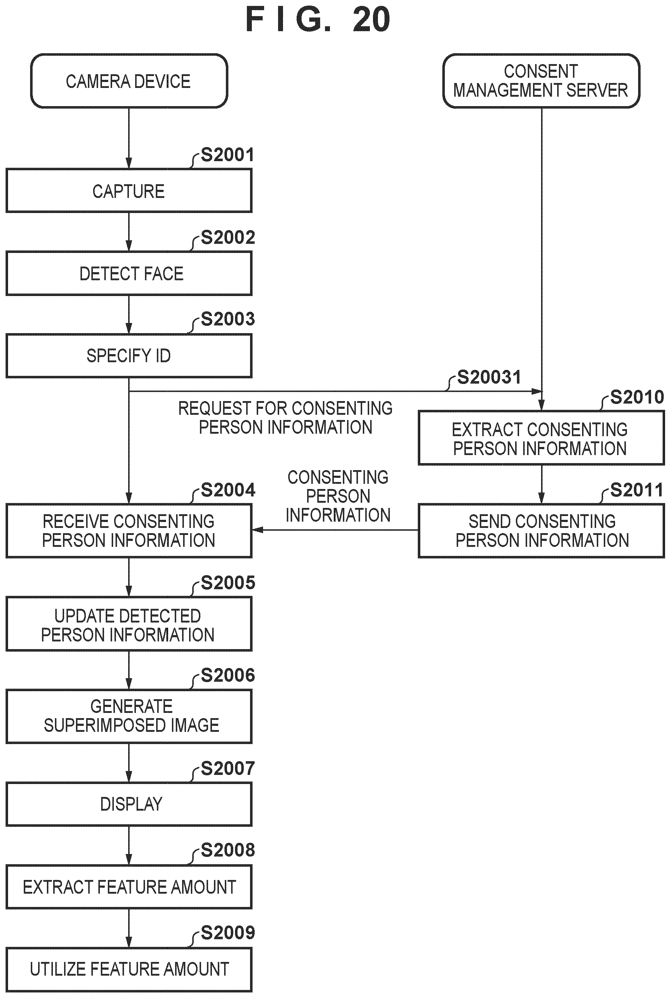

FIG. 20 is a sequence chart illustrating the flow of processing by the biometric identifier management system of the first embodiment. Descriptions of parts already described above will be simplified.

As illustrated in FIG. 20, in step S2001, the image capturing unit 111 of the camera device 11 captures an image of a subject including a person or the like and generates a captured image.

In step S2002, the face detection unit 112 detects the face of a person from the captured image.

In step S2003, the ID input unit 113 obtains the ID of the person, input by a user or the like. In step S20031, the first communication unit 115 makes a request for the consenting person information to the consent management server 12.

In step S2010, the consent extraction unit 122 of the consent management server 12 extracts the consenting person information held by the consent information holding unit 123.

In step S2011, the second communication unit 121 sends the consenting person information to the first communication unit 115 of the camera device 11.

In step S2004, the first communication unit 115 of the camera device 11 receives the consenting person information from the consent management server 12.

In step S2005, the comparison unit 116 compares the ID in the detected person information with the IDs in the consenting person information, determines whether the ID in the detected person information is present among the IDs in the consenting person information, and updates the detected person information on the basis of the result of the determination. For example, if the ID in the detected person information is present among the IDs in the consenting person information, the comparison unit 116 changes "consent Y/N" for that person in the detected person information to "yes", and changes the name of that person from unknown. If the ID in the detected person information is not present among the IDs in the consenting person information, the comparison unit 116 may set "consent Y/N" to "no" for that person in the detected person information.

In step S2006, the display control unit 117 generates a new image by superimposing a face frame, the name of the person, and the like on the captured image.

In step S2007, the display control unit 117 displays the image, on which the face frame and the name have been superimposed, on the display unit 118.

In step S2008, the feature extraction unit 114 extracts a feature amount of the person for which "consent Y/N" in the detected person information is "yes".

In step S2009, the camera device 11 performs processing that utilizes the feature amount. The processing that utilizes the feature amount may be, for example, outputting the biometric identifier to another device, storing the biometric identifier in a storage device, performing additional learning using the biometric identifier, identifying a person using the biometric identifier, and the like. More specifically, the first communication unit 115 can send the feature amount to an external device for use in reinforcement learning. The feature extraction unit 114 may also perform additional learning using the feature amount. Note that steps S2008 and S2009 may be executed after step S2005.

As described above, in the biometric identifier management system of the first embodiment, the consent management server 12 holds information regarding consent for the use of features, and makes that information available to other devices (the camera device 11). Through this, it is not necessary to obtain consent each time an image is shot, which has the effect of lightening the burden on the user. Additionally, the consent management server 12 centrally manages consent for the use of feature amounts, which has the effect of making it easy to manage the information related to consent.

There is a further effect in that the camera device 11 functioning as a biometric identifier usage device does not need to send the biometric identifier to the consent management server 12 functioning as a biometric identifier management server.

### Second Embodiment

The first embodiment described an example in which a feature amount of a face is used as a biometric identifier only when consent has been given for the use of the biometric identifier. A second embodiment will describe a configuration in which the ID need not be designated for each person.

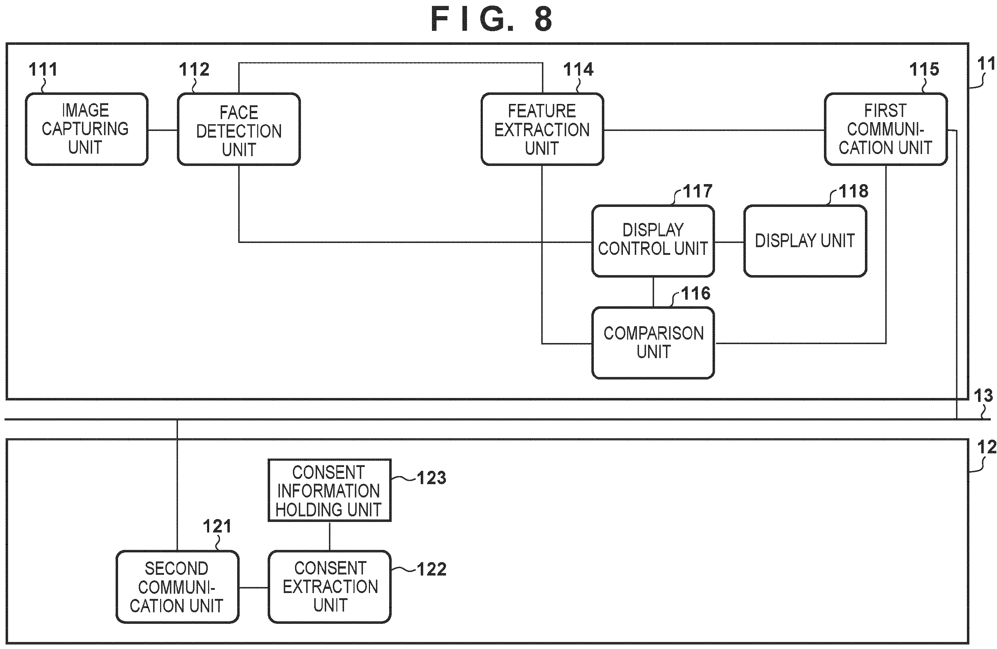

FIG. 8 is a block diagram illustrating the overall configuration of the biometric identifier management system of the second embodiment. As illustrated in FIG. 8, the difference from the first embodiment illustrated in FIG. 1 is that the biometric identifier management system of the second embodiment does not include the ID input unit 113. In the second embodiment, the feature extraction unit 114 extracts, as person information, a feature amount of the face of a person extracted from a captured image. The feature extraction unit 114 is an example of an "obtaining unit".

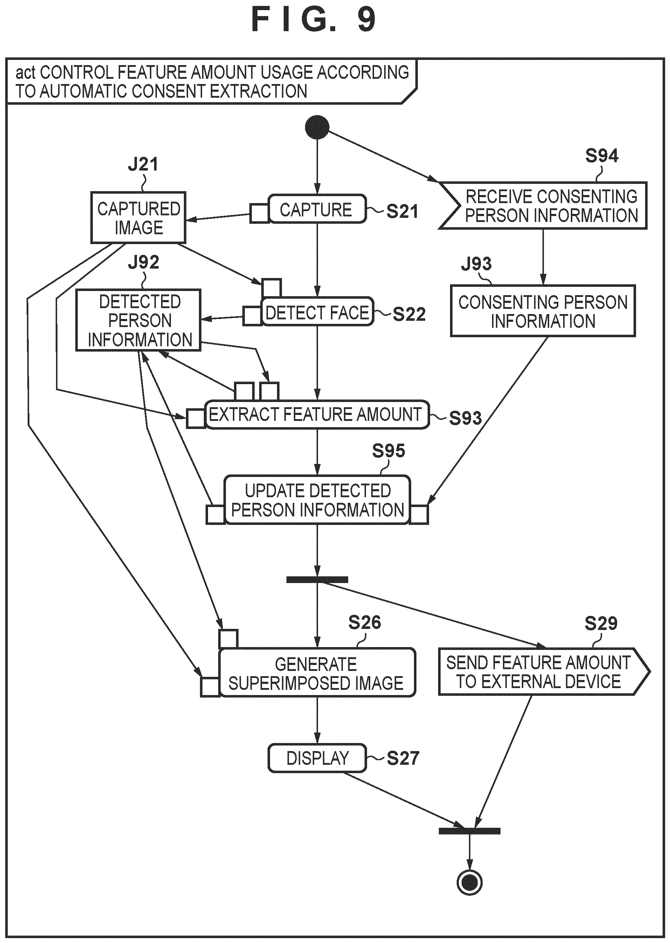

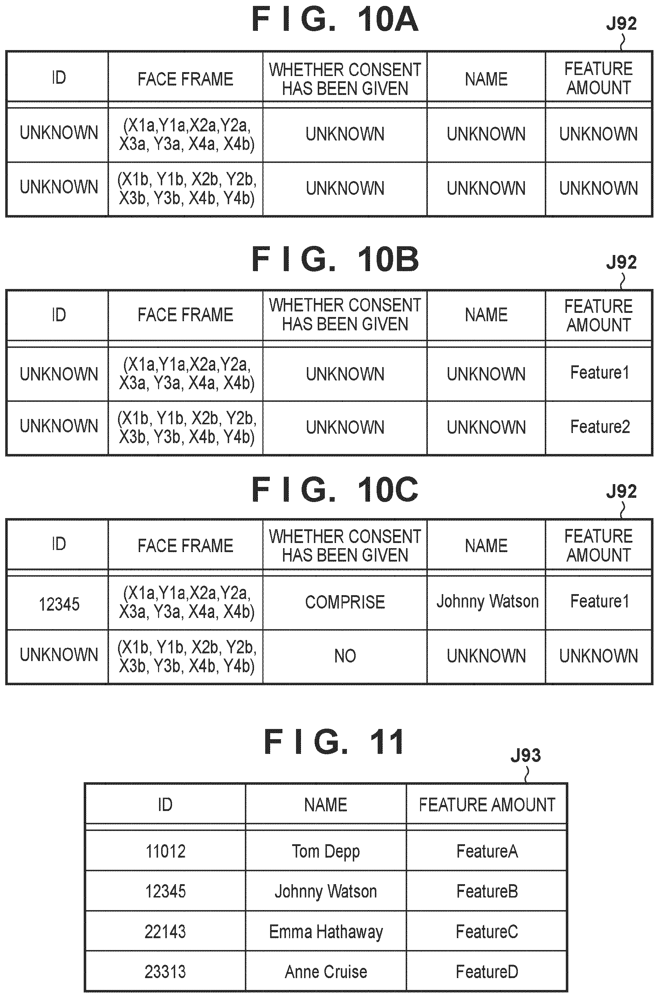

FIG. 9 is a diagram illustrating the flow of consent information determination processing executed by the camera device 11 of the second embodiment. FIGS. 10A to 10C are diagrams illustrating an example of detected person information J92 of the second embodiment. FIG. 11 is a diagram illustrating an example of consenting person information of the second embodiment. Although there may be differences in inputs and outputs for items given the same numbers, the same operations are performed in principle. The same applies to the subsequent embodiments as well. Note also that in the second embodiment, the consenting person information J61 will be described as consenting person information J93.

The following descriptions will focus on parts that perform operations different from those in the first embodiment illustrated in FIGS. 1 and 2.

In step S22, the face detection unit 112 executes face detection processing for detecting the faces of the people on the captured image J21, and generates and outputs the detected person information J92. FIG. 10A illustrates an example of the detected person information J92 generated by the face detection unit 112. Compared to the detected person information J22 in FIG. 4A, the detected person information J92 in FIG. 10A has a greater number of "feature amount" fields.

In step S93, the feature extraction unit 114 extracts a feature amount of the face of the person. The feature extraction unit 114 adds the extracted feature amount and updates the detected person information J92. FIG. 10B illustrates an example of the updated detected person information J92. Note that the method for extracting the feature amount in step S93 is the same as in step S28 in FIG. 2.

As illustrated in FIG. 6, in step S61, the consent extraction unit 122 obtains the consenting person information J93 from the consent information holding unit 123. As illustrated in FIG. 11, in addition to the consenting person information J61 illustrated in FIG. 7, a feature amount of each person is added to the consenting person information J93 held by the consent information holding unit 123 in the second embodiment. The feature amount of each person may be an average feature amount.

Here, the feature amount in the detected person information J92 illustrated in FIG. 10B is a feature amount calculated from the face included in the image from which the feature extraction unit 114 has cropped the part corresponding to the face frame from the captured image J21.

On the other hand, the feature amount in the consenting person information J93 illustrated in FIG. 11 is a feature amount of a specific person (e.g., having an ID of "12345") that has been extracted and registered in advance. An individual identification method using facial recognition compares the feature amounts of registered people (individuals) with the feature amount obtained from the image captured by the camera, and identifies a person by treating similar values as belonging to the same person. Note that known technology may be applied as the method for calculating the feature amount in FIG. 11, and as this is widely known in the field of facial recognition, details thereof will be omitted.

As one example, there is an individual identification method that calculates feature amounts calculated from various face images of a specific person in advance and then takes an average of those feature amounts. Since the feature amounts of the same person are calculated so as to have similar values, it is conceivable that the feature amount in FIG. 10B calculated from individual images will have a value close to the average feature amount illustrated in FIG. 11, provided that the feature amount is calculated from the same person.

In step S62, the second communication unit 121 sends the consenting person information J93 obtained by the consent extraction unit 122 to the first communication unit 115 of the camera device 11 over the network 13.

Although the feature amount, which is a biometric identifier, is transferred from the consent management server 12 to the camera device 11 here, the person registered in the consent information holding unit 123 has already consented to the use of their biometric identifier to begin with, and there is thus no particular problem.

Returning to FIG. 9, in step S94, the first communication unit 115 receives the consenting person information J93, including the feature amount of the person who has consented to the use of their biometric identifier, from the second communication unit 121 of the consent management server 12, which functions as a biometric identifier management server. In step S94, the camera device 11 may obtain the consenting person information from the consent management server 12 by, for example, sending a request for the consenting person information to the consent management server 12.

In step S95, the comparison unit 116 performs verification processing on the basis of the feature amount in each row of the consenting person information J93 received from the consent management server 12, illustrated in FIG. 11, and the feature amounts of the people in the detected person information J92 obtained by the feature extraction unit 114, illustrated in FIG. 10B, and determines whether that person consents to the use of their biometric identifier.

Note that in the feature amount verification processing, the comparison unit 116 calculates a similarity between the feature amounts, and determines the similarity. A suitable similarity calculation method may be adopted according to the algorithm for extracting the feature. A cosine similarity, Euclidean distance, or the like may be used to calculate the similarity, for example.

In the example in the second embodiment, it is assumed that the similarity between Feature 1 in the detected person information J92 in FIG. 10B and Feature B in the consenting person information J93 in FIG. 11 is high, and the similarities of other combinations are low.

In this case, in step S95, the comparison unit 116 determines that the person having Feature 1 in the first row of the detected person information J92 is the person having Feature B in the second row of the consenting person information J93. As a result, the comparison unit 116 determines that the person consents to the use of biometric authentication, and updates the first row of the detected person information J92.

FIG. 10C illustrates the updated detected person information J92. On the basis of the information of Feature B in the consenting person information J93, the comparison unit 116 updates the ID of the person in the first row of the detected person information J92 to "12345", "consent Y/N" to "yes", and "name" to "Johnny Watson".

On the other hand, if the feature amount of the person in the detected person information J92 is not similar to any of the feature amounts in the rows of the consenting person information J93, the comparison unit 116 determines that the person does not consent to the use of biometric authentication, and may update the detected person information J92 as indicated in the second row of FIG. 10C on the basis of the result of the determination. Specifically, the comparison unit 116 updates "consent Y/N" for the person to "no", deletes the feature amount, and updates the feature amount to "unknown".

The processes of steps S26, S27, and S29 are the same as in the first embodiment, and an image obtained by superimposing the face frame and name on the captured image J21 is displayed on the display unit 118, as illustrated in FIG. 3C.

In the present embodiment, in step S93, the feature extraction unit 114 also calculates the feature amount for a person whose consent to the use of their biometric identifier is unknown. However, for a person whose consent cannot be confirmed, the camera device 11 only uses the feature amount to confirm whether the person has given their consent, and neither displays the name (uses the feature amount) nor transfers the feature amount outside the camera device 11. In addition, the camera device 11 performs the next instance of shooting in step S21 while holding the detected person information J92 including the feature amount in the memory, and overwrites the information, which means that substantially, the feature amount is not stored.

Although the handling of feature amounts (biometric identifiers) is being legislated in various countries and regions, the present embodiment can be adopted under the assumption that no laws or regulations are violated.

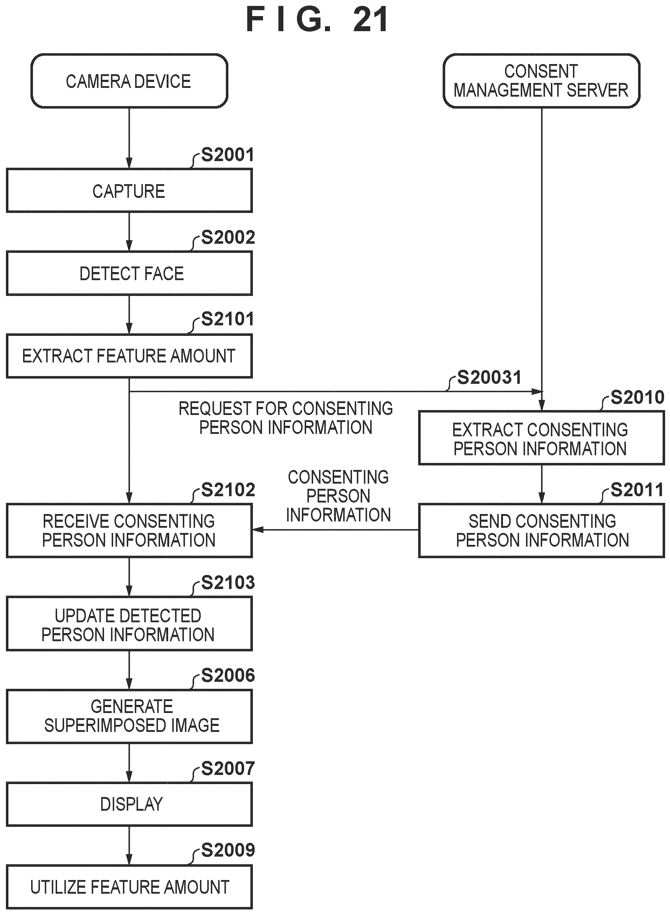

FIG. 21 is a sequence chart illustrating the flow of processing by the biometric identifier management system of the second embodiment. Descriptions of parts already described above will be simplified or partially omitted.

As illustrated in FIG. 21, after the camera device 11 executes steps S2001 and S2002, in step S2101, the feature extraction unit 114 extracts a feature amount from the face of the person. Additionally, in step S20031, the first communication unit 115 makes a request for the consenting person information to the consent management server 12.

In step S2010, the consent extraction unit 122 of the consent management server 12 extracts the consenting person information held by the consent information holding unit 123. The consenting person information here includes a feature amount, as illustrated in FIG. 11.

In step S2011, the second communication unit 121 sends the consenting person information to the first communication unit 115 of the camera device 11.

In step S2102, the first communication unit 115 of the camera device 11 receives the consenting person information including the feature amount.

In step S2103, the comparison unit 116 compares the feature amount of the person in the detected person information J92 with the feature amount in each row of the consenting person information J93, determines whether a person matching the person in the detected person information is present in the consenting person information, and updates the detected person information on the basis of the result of the determination.

After this, the camera device 11 executes steps S2006, S2007, and S2009. Step S2009 may be executed before steps S2006 and S2007, or may be executed in parallel therewith.

As described above, in the second embodiment, a feature amount of the face of a person appearing in a captured image is extracted as a biometric identifier, and the feature amount of a person who has consented to the use of their biometric identifier is obtained from the consent management server 12 outside the camera device 11. The camera device 11 of the second embodiment then determines whether consent has been given using a biometric identifier extracted within the device on the basis of the obtained feature amount of the person.

According to the second embodiment, there is no need to designate an ID for each person in order to identify a person in a captured image, which has the effect of lightening the burden on the user.

### Third Embodiment

A third embodiment will describe an example in which the camera device 11 obtains the consenting person information of a person appearing in the captured image J21 from the consent management server 12.

More specifically, the camera device 11 of the third embodiment sends a query including the ID obtained by the ID input unit 113 to the consent management server 12. In response to the query, the consent management server 12 sends, to the camera device 11, a response indicating whether the person corresponding to the ID included in the query, among the information in the consenting person information, consents to the use of their biometric identifier. The camera device 11 receives the response, determines whether consent has been given, and updates the detected person information. Doing so makes it possible to reduce an increase in network traffic, an increase in the processing load of step S25 for the ID comparison within the camera device 11, and the like.

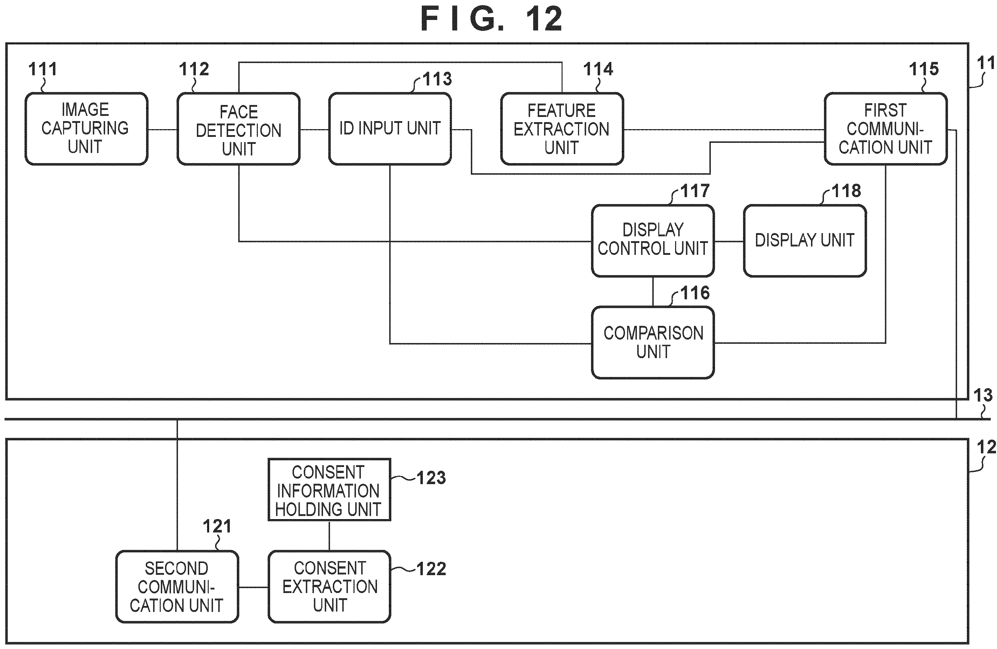

FIG. 12 is a block diagram illustrating the overall configuration of the biometric identifier management system of the third embodiment. In the third embodiment, the ID input unit 113 is connected to the first communication unit 115.

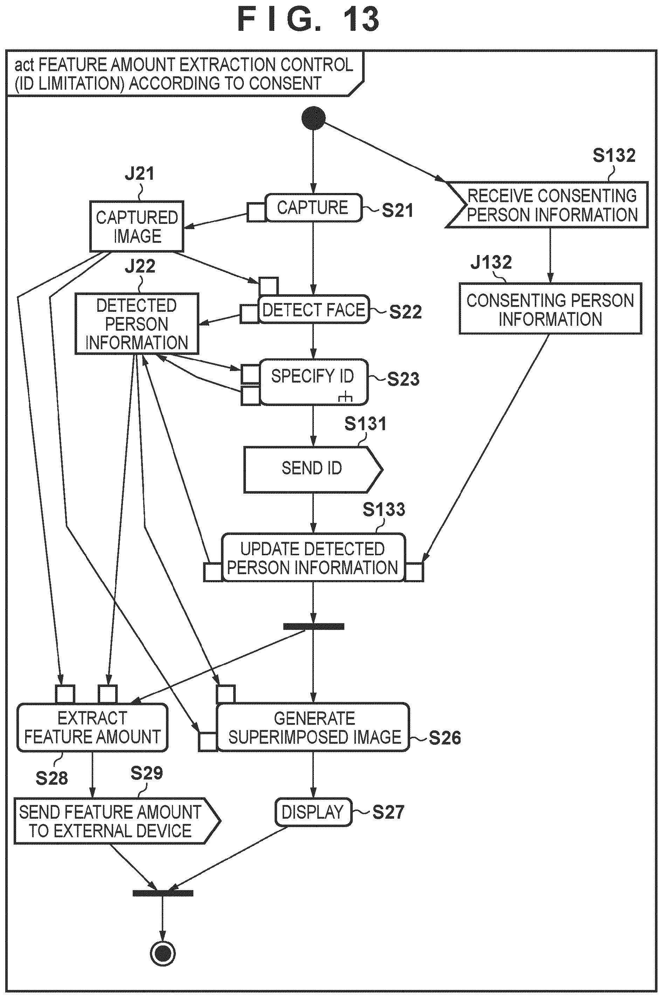

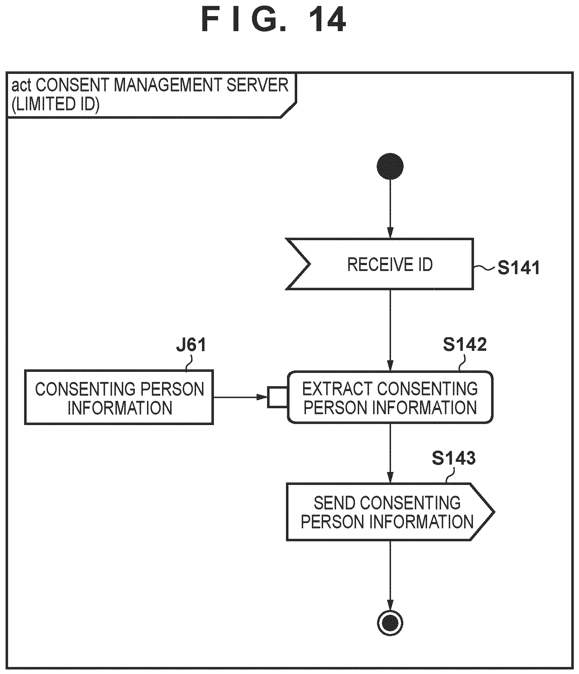

FIG. 13 is a diagram illustrating the flow of consent information determination processing executed by the camera device 11 of the third embodiment. FIG. 14 is a diagram illustrating the flow of consent information sending processing executed by the consent management server 12 of the third embodiment.

As illustrated in FIG. 13, in the camera device 11 of the third embodiment, in step S131 after step S23, the first communication unit 115 sends the ID as a query. As illustrated in FIG. 14, the second communication unit 121 of the consent management server 12 of the third embodiment receives the ID sent by the first communication unit 115 in step S141, and the consent extraction unit 122 extracts the consenting person information of the person corresponding to that ID in step S142.

The following descriptions will focus on steps S131, S133, and S141 to S143, which are different from the first embodiment.

In step S23, the ID input unit 113 of the camera device 11 specifies the ID of a target person. Here, the detected person information J22 is assumed to be that illustrated in FIG. 4B, and the ID specified by the ID input unit 113 is assumed to be "12345" only.

In step S131, the first communication unit 115 sends a query including the specified ID to the second communication unit 121 of the consent management server 12 over the network 13. Here, the first communication unit 115 sends the specified ID of "12345" to the consent management server 12.

In step S141, the second communication unit 121 of the consent management server 12 receives the ID of "12345" sent from the first communication unit 115.

In step S142, the consent extraction unit 122 checks whether an ID matching the received ID of "12345" is present in the consenting person information J61 held in the consent information holding unit 123. Referring to FIG. 7, a row having an ID of "12345" and a name of "Johnny Watson" is present as a row having a matching ID of "12345". Accordingly, the consent extraction unit 122 extracts the information of that row from the consenting person information J61.

In step S143, the second communication unit 121 sends the information of the row of the consenting person information J61 extracted by the consent extraction unit 122 to the first communication unit 115 of the camera device 11 as a response indicating consent to the use of a biometric identifier.

Although the foregoing describes an example in which the camera device 11 sends a single ID of "12345" in step S131, the camera device 11 may send a query including a plurality of IDs to the consent management server 12. Note that when sending a plurality of IDs, the first communication unit 115 may send the plurality of IDs simultaneously or sequentially. In this case, the consent extraction unit 122 performs the processing of steps S141 to S143 for all the IDs that have been sent. Additionally, if the consent extraction unit 122 cannot find a corresponding ID in the consenting person information J61, the second communication unit 121 may send an indication that the ID was not found.

Returning to FIG. 13, in step S132, the first communication unit 115 of the camera device 11 receives consenting person information J132. Here, the first communication unit 115 receives the consenting person information J132 in the row corresponding to the ID that has been sent.

In step S133, the comparison unit 116 of the camera device 11 compares the ID in the received consenting person information J132 with the ID in each row of the detected person information J22, and updates the information in the corresponding row of the detected person information J22.

After this, the camera device 11 performs the processing of steps S26, S27, S28, and S29.

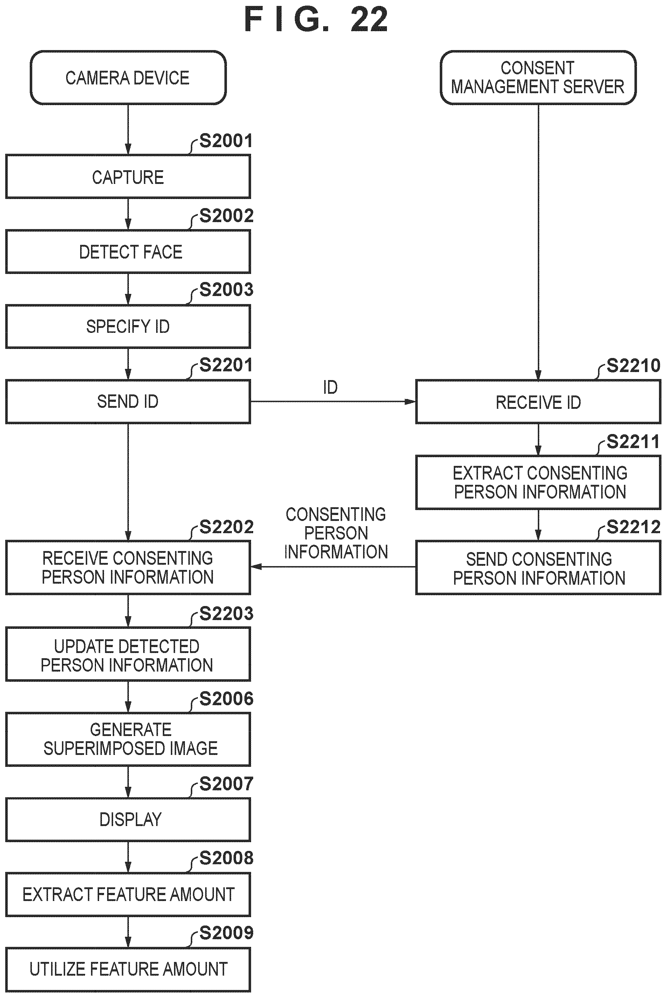

FIG. 22 is a sequence chart illustrating the flow of processing by the biometric identifier management system of the third embodiment. Descriptions of processing already described above will be simplified or partially omitted.

As illustrated in FIG. 22, after the camera device 11 executes steps S2001 to S2003, in step S2201, the first communication unit 115 sends a query including the ID of a person in the captured image, obtained by the ID input unit 113, to the consent management server 12.

In step S2210, the second communication unit 121 of the consent management server 12 receives the query sent from the camera device 11.

In step S2211, the consent extraction unit 122 extracts the information of the person corresponding to the received ID from the consenting person information.

In step S2212, the second communication unit 121 sends the information extracted by the consent extraction unit 122 from the consenting person information (the information associated with that ID) to the first communication unit 115 of the camera device 11.

In step S2202, the first communication unit 115 receives the information sent by the second communication unit 121.

In step S2203, the comparison unit 116 compares the ID in the consenting person information received from the consent management server 12 with the ID in each row of the detected person information, and updates the information in the corresponding row of the detected person information.

After this, the camera device 11 executes steps S2006 to S2009.

As described above, the camera device 11 of the third embodiment sends the ID of a person appearing in a captured image to the consent management server 12, and obtains the corresponding consenting person information from the consent management server 12. According to the third embodiment, the amount of data sent from the consent management server 12 to the camera device 11 can be reduced, even when a large number of people have consented to the use of their biometric identifiers. Accordingly, the third embodiment has the effects of making it possible to prevent an increase in network traffic, lighten the processing load in the camera device 11, and shorten the processing time.

### Fourth Embodiment

A fourth embodiment will describe a configuration that does not require the input of an ID and that prevents an increase in network traffic.

More specifically, in the fourth embodiment, information that cannot identify a person but which can provide candidates for people is sent from the camera device 11 to the consent management server 12. The consent management server 12 extracts information about people serving as candidates from the consenting person information on the basis of the received information and returns that information to the camera device 11.

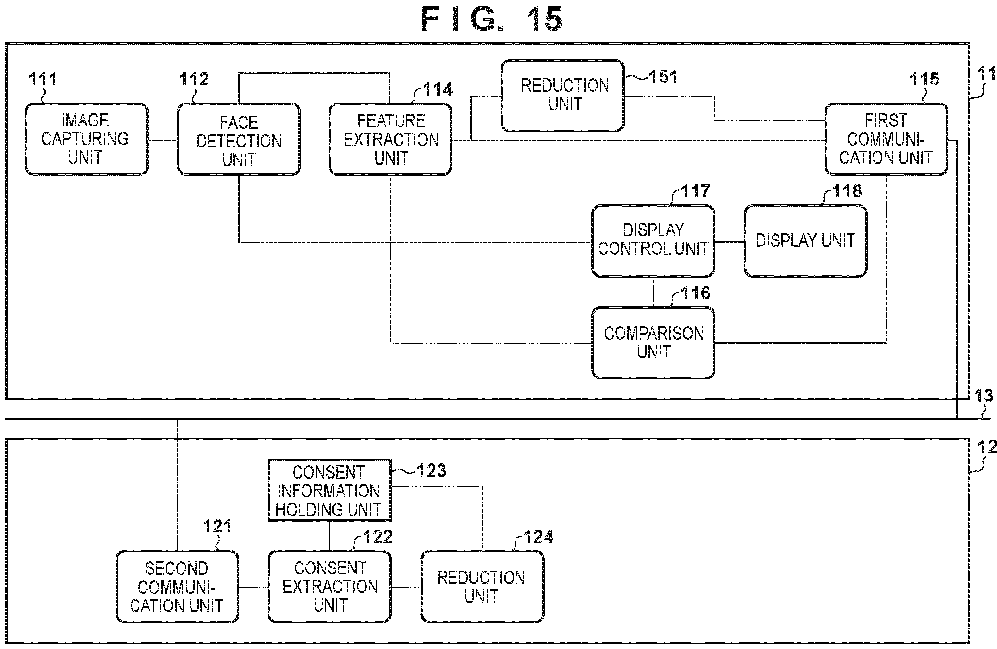

FIG. 15 is a block diagram illustrating the overall configuration of the biometric identifier management system of the fourth embodiment. As illustrated in FIG. 15, the difference from the second embodiment illustrated in FIG. 8 is that in the fourth embodiment, the camera device 11 includes a reduction unit 151 and the consent management server 12 includes a reduction unit 124. The reduction unit 151 and the reduction unit 124 generate reduced information by reducing the information of the feature amount of a person, i.e., the amount of data.

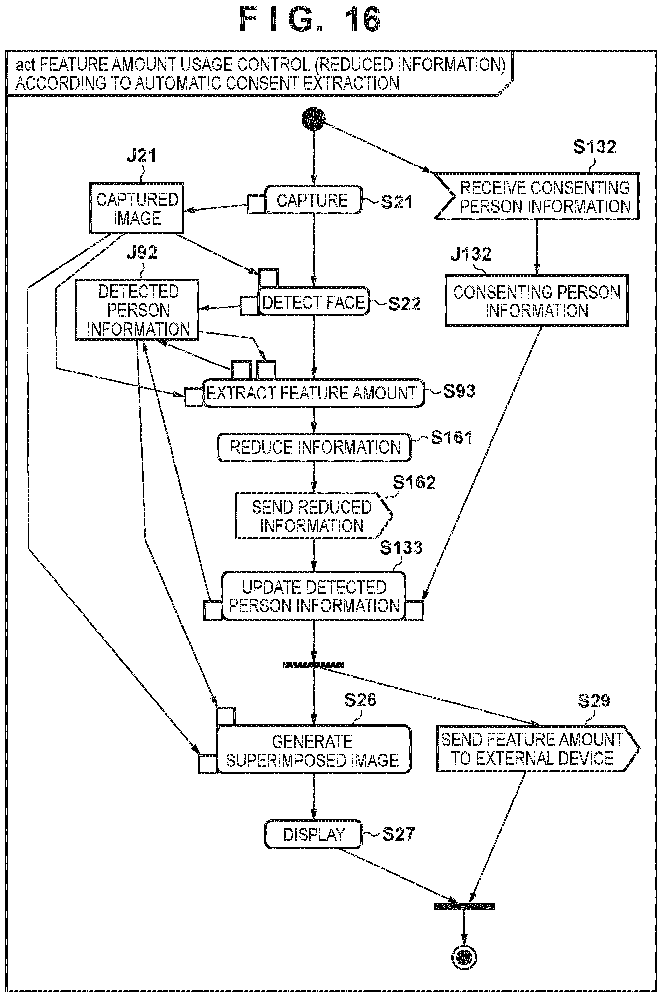

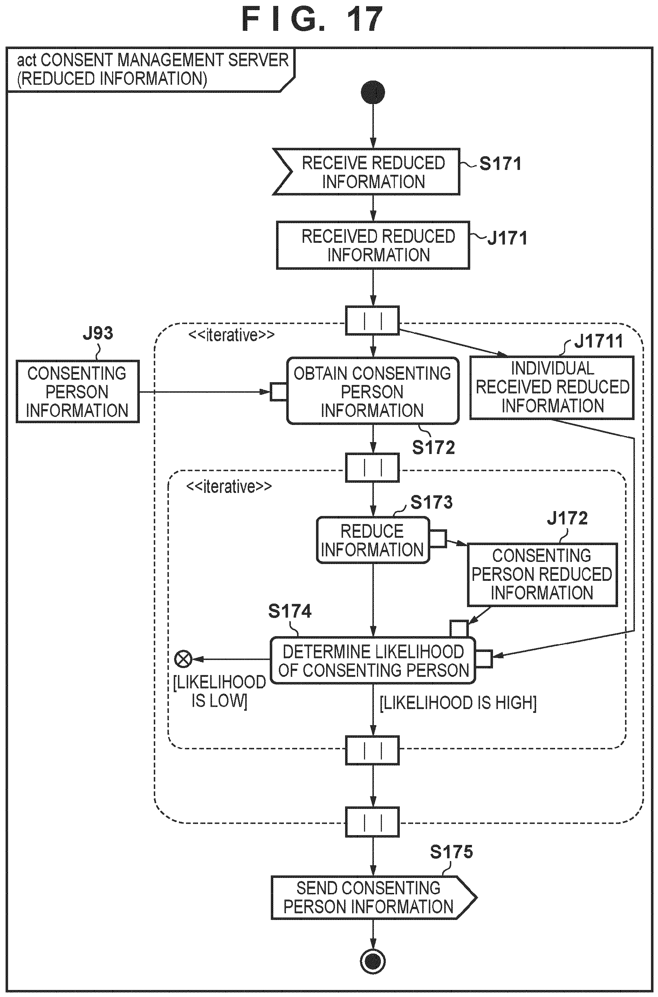

FIG. 16 is a diagram illustrating the flow of consent information determination processing executed by the camera device 11 of the fourth embodiment. FIG. 17 is a diagram illustrating the flow of consent information sending processing executed by the consent management server 12 of the fourth embodiment. FIG. 18 is a diagram illustrating an example of consenting person information of the fourth embodiment.

As illustrated in FIG. 16, the camera device 11 of the fourth embodiment executes steps S161 and S162 between steps S93 and S133. The following will primarily describe the differences from the foregoing embodiments.

In step S93, the feature extraction unit 114 of the camera device 11 extracts a feature amount for each face image included in the captured image and passes the feature amounts to the reduction unit 151.

In step S161, the reduction unit 151 performs processing for reducing the information (data amount) of the feature amount extracted by the feature extraction unit 114. Hereinafter, information in which the information of the feature amount is reduced will be referred to as "reduced information".

In general, a feature amount has the ability to identify an individual, and is a biometric identifier. The purpose of reducing the feature amount in step S161 is to convert a feature amount serving a biometric identifier having the ability to identify an individual into information that does not have the ability to identify an individual but has the ability to identify a plurality of candidates for people including that person, i.e., into information that is not a biometric identifier.

For example, in the case of a feature amount with the ability to identify 10 million individuals, the feature amount calculated from person A's face image can identify that single person A from the 10 million people. However, the reduced information based on this feature amount has the ability to provide only (for example) 100 candidates including person A among the 10 million people, but cannot identify the individuals.

The method for reducing the feature amount is not particularly limited in the present embodiment. For example, the reduction unit 151 can obtain the reduced information by performing a predetermined operation on a specific dimension of feature amounts indicated by a vector, or by removing the specific dimension from the feature amount. Specifically, if the feature amount is a real number of a 1024-dimensional vector, the reduction unit 151 may reduce the feature amount by keeping the 1024-dimensional vector and calculating the average value of the values of adjacent dimensions, or by calculating the weighted average value using the values of neighboring dimensions using a Gaussian kernel. Alternatively, the reduction unit 151 may delete a specific 512-dimensional part of the 1024-dimensional part and then use the remaining 512-dimensional vector as the reduced information.

The following will describe the reduced information as having 512 dimensions.

Through this, in step S161, the reduced information obtained by the reduction unit 151 has lost the ability to identify an individual, and is not a biometric identifier.

In step S162, the first communication unit 115 sends a query including the reduced information obtained by the reduction unit 151 to the second communication unit 121 of the consent management server 12 over the network 13.

As illustrated in FIG. 17, in step S171, the second communication unit 121 of the consent management server 12 receives the reduced information as received reduced information J171.

The consent management server 12 then repeats the processing of steps S172 to S174 described below for each items of individual received reduced information J1711 included in the received reduced information J171 received here.

In step S172, the reduction unit 124 obtains the consenting person information J93 illustrated in FIG. 11 from the consent information holding unit 123.

The reduction unit 124 and the consent extraction unit 122 repeat the processing of steps S173 to S174 for the feature amount of each person in the consenting person information J93, and extract and list people serving as candidates for the individual received reduced information J1711.

Because the feature amount of the consenting person information J93 illustrated in FIG. 11 is a 1024-dimensional vector, it is not possible to directly compare this with the individual received reduced information J1711, which is a 512-dimensional vector. Accordingly, in step S173, the reduction unit 124 generates 512-dimensional consenting person reduced information J172 by reducing the information of each feature amount in the consenting person information J93.

Note that step S161 in FIG. 16, which is executed by the reduction unit 151 of the camera device 11, and step S173 in FIG. 17, which is executed by the reduction unit 124 of the consent management server 12, execute the same reduction processing on the feature amount. As a result, the consent extraction unit 122 can compare the individual received reduced information J1711 with the consenting person reduced information J172.

In step S174, the consent extraction unit 122 calculates a similarity between the individual received reduced information J1711 and the consenting person reduced information J172. The method for calculating the similarity has already been described, and will therefore be omitted here.

In step S174, if the consent extraction unit 122 determines that the similarity is at least a predetermined value, it is assumed that there is a high likelihood that the person matches, and that person is selected as a candidate person. On the other hand, if the consent extraction unit 122 determines that the similarity is less than the predetermined value, the likelihood that the person matches is assumed to be low. In either case, returning to step S173, the reduction unit 124 reduces the information of the feature amount for the next person, and in step S174, the consent extraction unit 122 determines the similarity through a comparison with the new reduced information.

The reduction unit 124 and the consent extraction unit 122 execute the processing of steps S173 and S174 for all the people in the consenting person information J93, and generate a list of candidate people for the individual received reduced information J1711. The list of candidate people is also a list indicating whether the person corresponding to the feature amount obtained by the feature extraction unit 114 consents to the use of their biometric identifier. If there are a plurality of items of the individual received reduced information J1711, the reduction unit 124 and the consent extraction unit 122 repeat the processing from step S172 onward, and generate a list of candidate people for all the items of the individual received reduced information J1711. In this case, the consent extraction unit 122 generates a table associating each item of the individual received reduced information J1711 with the list of candidate people as the result of determining the similarity.

In step S175, the second communication unit 121 sends a response including the list of candidate people extracted from the consenting person information to the first communication unit 115 over the network 13 as a response to the query.

For example, assume that among the feature amounts illustrated in FIG. 10B, the reduced information of Feature 1 is sent to the consent management server 12, and the consent extraction unit 122 determines that the reduced information of Feature 1 is highly similar to two items of reduced information, namely that of Feature A and Feature B in FIG. 11. In this case, the consent extraction unit 122 selects the IDs of "11012" and "12345" as candidate people, and thus extracts information about the people in the first and second rows in FIG. 11 from the consenting person information J93. Accordingly, the second communication unit 121 sends information about the two people (names, consent, and feature amounts) to the camera device 11 as a response.

On the other hand, assume that among the feature amounts illustrated in FIG. 10B, the reduced information of Feature 2 is sent to the consent management server 12, and the consent extraction unit 122 determines that the similarity is low for the reduced information of all the feature amounts illustrated in FIG. 11. In this case, the second communication unit 121 sends information indicating that the person is not present to the camera device 11 as a response.

Returning to FIG. 16, in step S132, the first communication unit 115 receives the list of candidate people sent by the second communication unit 121 as the consenting person information J132.

In step S133, for example, the comparison unit 116 compares Feature 1 in the first row of the detected person information J92 illustrated in FIG. 10B with Feature A and Feature B, which are feature amounts of the candidate people, and determines that the person is the person corresponding to Feature A, i.e., the person with the ID of "12345".

The comparison unit 116 also determines that the person in the second row of the detected person information J92 illustrated in FIG. 10B is not included in the candidate people, i.e., is not a person that consents to the use of their biometric identifier.

The comparison unit 116 updates the detected person information J92 on the basis of the result of the determination, resulting in the information illustrated in FIG. 10C.

The subsequent processing (steps S26, S27, and S29) is the same in FIG. 9.

Although the present embodiment describes reducing the information in step S173 each time and calculating the consenting person reduced information J172 in the consent management server 12, the reduced information may also be generated at the same time as the consenting person information J93 is generated. FIG. 18 illustrates an example of the consenting person information J93 in this case. As illustrated in FIG. 18, the consenting person information J93 includes reduced information of a feature amount associated with the ID of each person.

Doing so makes it unnecessary to perform the processing of step S173 each time, and the comparison with the reduced information illustrated in FIG. 18 in step S174 is sufficient. This makes it possible to lighten the processing load on the consent management server 12.

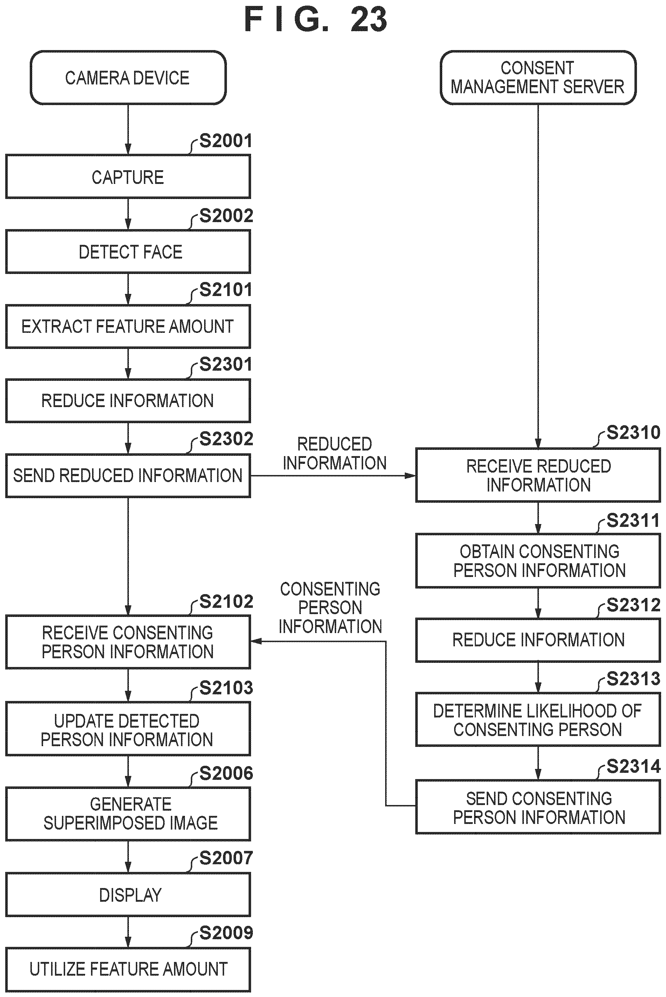

FIG. 23 is a sequence chart illustrating the flow of processing by the biometric identifier management system of the fourth embodiment. Descriptions of parts already described above will be simplified or partially omitted.

As illustrated in FIG. 23, after the camera device 11 executes steps S2001, S2002, and S2101, in step S2301, the reduction unit 151 reduces the information of the extracted feature amount to generate the reduced information.

In step S2302, the first communication unit 115 sends a query including the reduced information to the second communication unit 121 of the consent management server 12.

In step S2310, the second communication unit 121 of the consent management server 12 receives the query sent by the first communication unit 115.

In step S2311, the reduction unit 124 obtains the consenting person information from the consent information holding unit 123.

In step S2312, the reduction unit 124 generates the consenting person reduced information by reducing the information of the feature amount in the consenting person information in the same manner as in step S2301.

In step S2313, the consent extraction unit 122 compares the reduced information received in step S2310 (the received reduced information) with the consenting person reduced information obtained by reducing the amount of data for the feature amount in each row of the consenting person information, and extracts a row of the consenting person information for a candidate person similar to the received reduced information. Note that if the received reduced information includes the individual received reduced information, which is information of a plurality of people, the consent extraction unit 122 makes a similarity determination for each item of the individual received reduced information.

In step S2314, the second communication unit 121 sends the information of each row of the consenting person information of the candidate people extracted by the consent extraction unit 122 to the camera device 11.

In step S2102, the first communication unit 115 of the camera device 11 receives the information of each row of the consenting person information sent by the second communication unit 121.

The camera device 11 then executes the processing of steps S2103, S2006, S2007, and S2009.

As described above, according to the fourth embodiment, the camera device 11 calculates a feature amount of a person appearing in a captured image and sends a result of converting the feature amount into reduced information that does not have the ability to identify an individual to the consent management server 12. Then, on the basis of the reduced information, the consent management server 12 extracts candidate people who have consented to the use of their biometric identifiers, and sends a list of the candidate people to the camera device 11.

In this manner, according to the fourth embodiment, there is no need to designate an ID for each person every time in order to identify a person in a captured image. Furthermore, even if a large number of people have consented to the use of their biometric identifiers, the consent management server 12 can reduce the amount of data returned from the consent management server 12 to the camera device 11 by extracting the candidate people. Accordingly, the fourth embodiment has at least one of the following effects, namely making it possible to lighten the burden on the user, prevent an increase in network traffic, lighten the processing load in the camera device 11, and shorten the processing time.

Note that the camera device 11 in the foregoing embodiments can be a device in which the image capturing unit 111 is built in, such as a digital camera, a smartphone, a tablet PC, or the like, for example, or the image capturing unit 111 and the information processing apparatus 190 can be configured as separate devices.

### Other Embodiments

In the foregoing embodiments, outputting the biometric identifier to another device, storing the biometric identifier in storage device, executing additional learning using the biometric identifier, specifying a person using the biometric identifier, and the like are described as processing that uses a biometric identifier of a person according to a result of the determination by the comparison unit 116. However, the processing that uses the biometric identifier is not limited thereto, and may be changed as appropriate.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An information processing apparatus comprising:
an obtaining means that obtains person information that is identification information assigned to each person in a group of people included in a captured image;
a communication means that communicates with a server storing information identifying a consenting person that consents to use of a biometric identifier;
a determination means that determines whether the person included in the captured that corresponds to the obtained person information is a person who consents to the use of the biometric identifier, based on the received consenting person information from the server; and
a processing means that executes processing which uses the biometric identifier of the person in accordance with a consent determination by the determination means.

2. The information processing apparatus according to claim 1,
wherein the communication means receives consenting person information including identification information of the consenting person from the server, and
the determination means determines that the person consents to the use of the biometric identifier when the identification information included in the consenting person information received from the server includes the obtained identification information.

3. The information processing apparatus according to claim 1,
wherein the communication means:
sends a query including the obtained identification information to the server; and
receives, as a response to the query, a response indicating whether the person corresponding to the identification information consents to the use of the biometric identifier.

4. The information processing apparatus according to claim 1,
wherein the person information is a feature amount of the person extracted from the captured image.

5. The information processing apparatus according to claim 4,
wherein the communication means receives consenting person information including a feature amount of the consenting person from the server, and
the determination means determines whether the person consents to the use of the biometric identifier by performing verification processing based on a feature amount included in the received consenting person information from the server and the obtained feature amount.

6. The information processing apparatus according to claim 4, further comprising:
a reduction means that obtains reduced information by reducing an amount of data of the obtained feature amount,
wherein the communication means:
sends a query including the reduced information obtained by the reduction means to the server; and
receives, as a response to the query from the server, a response indicating whether the person corresponding to the obtained feature amount consents to the use of the biometric identifier.

7. The information processing apparatus according to claim 6,
wherein the reduction means obtains the reduced information by one or both of performing a predetermined operation on a specific dimension of the feature amount indicated by a vector, and removing a specific dimension from the feature amount.

8. The information processing apparatus according to claim 1,
wherein the biometric identifier is a feature amount extracted from one or more of a face, a fingerprint, and an iris pattern.

9. The information processing apparatus according to claim 1,
wherein the processing means executes at least one of the following as processing that uses the biometric identifier of the person:
outputting the biometric identifier to another apparatus;
storing the biometric identifier in a storage means;
executing additional learning using the biometric identifier; and
identifying a person using the biometric identifier.

10. The information processing apparatus according to claim 1, further comprising:
an extracting means that extracts a biometric identifier of the person when a determined result indicates consent to use biometric information.

11. The information processing apparatus according to claim 4,
wherein the determination means deletes the feature amount of the person in a case where a result of the determination indicates no consent.

12. An information processing method comprising:
obtaining person information that is identification information assigned to each person in a group of people included in a captured image;
communicating with a server storing information identifying a consenting person that consents to use of a biometric identifier;
determining whether the person included in the captured that corresponds to the obtained person information is a person who consents to the use of the biometric identifier, based on the received consenting person information from the server; and
executing processing which uses the biometric identifier of the person in accordance with a consent determination.

13. A non-transitory computer-readable storage medium storing a program that, when read and executed by a computer, causes the computer to function as:
an obtaining means that obtains person information that is identification information assigned to each person in a group of people included in a captured image;
a communication means that communicates with a server storing information identifying a consenting person that consents to use of a biometric identifier;
a determination means that determines whether the person included in the captured that corresponds to the obtained person information is a person who consents to the use of the biometric identifier, based on the received consenting person information from the server; and
a processing means that executes processing which uses the biometric identifier of the person in accordance with a consent determination by the determination means.
